# EUROPÄISCHE PATENTSCHRIFT

(11) **EP 0 828 800 B1**
(45) Veröffentlichungstag und Bekanntmachung des Hinweises auf die Patenterteilung: **10.10.2001**
(21) Anmeldenummer: 96917449.9
(22) Anmeldetag: 28.05.1996
(51) Int. Cl.: C09D 161/04

(54) **ADHÄSIVES MITTEL AUF WÄSSRIGER BASIS**
WATER-BASED ADHESIVE
PRODUIT ADHESIF A BASE AQUEUSE

(30) Priorität: 02.06.1995 DE 19519945
(43) Veröffentlichungstag der Anmeldung: 18.03.1998
(73) Patentinhaber: Chemetall GmbH, 60487 Frankfurt (DE)
(72) Erfinder: DEHNICKE, Stefan, D-63071 Offenbach (DE); LIST, Ernst, D-65933 Frankfurt am Main (DE); RULLMANN, Helmut, D-60431 Frankfurt am Main (DE); ZELLNER, Adolf, D-64546 Mörfelden-Walldorf (DE)
(74) Vertreter: Uppena, Franz, Dr.
(86) Internationale Anmeldenummer: EP9602281
(87) Internationale Veröffentlichungsnummer: WO9638510

(56) Entgegenhaltungen:
- US-A- 5 200 455

## Beschreibung

Die vorliegende Erfindung betrifft ein adhäsives Mittel auf wäßriger Basis mit einem Gehalt von weniger als 5 Gew.-% an niedermolekularen, hydroxylhaltigen, organischen Verbindungen, das aus einer stabilisierten wäßrigen Dispersion eines oder mehrerer Phenolharze, einem oder mehreren Latices und einem oder mehreren, als Vernetzer wirkenden Metalloxiden besteht. Die Erfindung betrifft ferner die Verwendung des adhäsiven Mittels.

Aus der Druckschrift WO93/21233 ist ein Haftmittel bekannt, das neben Wasser Resorcin, Formaldehyd und einen Latex enthält, der aus einem Salz eines Copolymerisats besteht, das aus einem chlorierten Ethylen und Acrylsäure oder Methacrylsäure zusammengesetzt ist. Im bekannten Haftmittel wird durch alkalische Kondensation ein Resorcin-Formaldehyd-Harz in Anwesenheit des Latex in situ gebildet. Die Druckschriften US-A 3 775 158 und JP-A 60-11 56 79 offenbaren Haftmittel, die ein Resorcin-Formaldehyd-Harz sowie einen Latex aus einem chlorsulfonierten Polyolefin enthalten. Schließlich ist aus der US-A 5 200 455 die wäßrige Zusammensetzung eines adhäsiven Mittels bekannt, das als Primer eingesetzt wird und das eine durch Polyvinylalkohol stabilisierte wäßrige Phenolharz-Dispersion, einen Latex eines chlorierten oder chlorsulfonierten Polyolefins und ein Metalloxid enthält. Mit diesem bekannten adhäsiven Mittel wird eine gute Haftung einer auf einem Substrat aufgetragenen Schicht erreicht.

Aufgabe der vorliegenden Erfindung ist es, ein weiteres adhäsives Mittel bereitzustellen, das frei von organischen Lösungsmitteln ist und das als Haftvermittler (Haftgrundierung) eingesetzt werden kann.

Die der Erfindung zugrunde liegende Aufgabe wird durch ein adhäsives Mittel der eingangs genannten Art gelöst, bei dem die wäßrige Dispersion eines oder mehrerer Phenolharze durch ein oder mehrere Polyacrylate stabilisiert ist, bei dem die Latices aus einem oder mehreren halogenierten Polyolefinen gebildet sind und bei dem das adhäsive Mittel gegebenenfalls Pigmente und/oder Ruß sowie Dispergierhilfsmittel enthält.

Bei den halogenierten Polyolefinen handelt es sich um wasserverdünnbare oder emulgierbare sowie dispergierbare, polymere Filmbildner. Als Pigmente werden im Sinne der Erfindung vorzugsweise TiO₂ und/oder SiO₂ eingesetzt. Das erfindungsgemäße adhäsive Mittel ist frei von organischen Lösungsmitteln; es weist lediglich einen Gehalt von < 5 Gew.-% an niedermolekularen, hydroxylhaltigen, organischen Verbindungen auf. Überraschenderweise führt der Verzicht auf organische Lösungsmittel im erfindungsgemäßen Mittel nicht zu einer Verschlechterung der Haftkraft, auch nicht bei eisenhaltigen Substraten, was durch einsetzende Rostbildung zu erwarten wäre. Mit dem erfindungsgemäßen adhäsiven Mittel wird in überraschender Weise eine hervorragende Korrosionsbeständigkeit erreicht. Als Substrate werden bevorzugt eisenhaltige Metalle, aber auch Aluminium oder Kunststoffe, wie Polyamid, beschichtet. Bei der Anwendung des erfindungsgemäßen Mittels werden keine organischen Lösungsmittel freigesetzt. Das Mittel ist sehr gut zu handhaben, denn es erfolgt keine Beeinträchtigung der Umwelt. Abluftreinigung und besonders Brandschutzvorkehrungen sind beim Arbeiten mit dem erfindungsgemäßen Mittel nicht erforderlich. Bei Anwendung des erfindungsgemäßen Mittels ist das Beschichtungsverfahren umweltschonend und wirtschaftlich. Als Phenolharz kann ein Kondensationsprodukt von Phenolen mit Formaldehyd und insbesondere ein Resol und/oder ein Novolack-Harz verwendet werden. Mit diesen hitzereaktiven Phenolharzen werden sehr gute Ergebnisse bezüglich der Haftstärke bei sehr geringem Anteil an niedermolekularen, hydroxylhaltigen, organischen Verbindungen erreicht. Es ist ferner möglich, mindestens ein hydrophobes Phenolharz zu verwenden. Mit diesem Phenolharz werden ausgezeichnete Ergebnisse bezüglich der Haftstärke bei verschwindend geringem Anteil an niedermolekularen, hydroxylhaltigen, organischen Verbindungen erreicht. Die durch ein oder mehrere Polyacrylate stabilisierte wäßrige Dispersion eines oder mehrerer Phenolharze wird durch Mischen von Wasser, einem oder mehreren Polyacrylaten und einem oder mehreren Phenolharzen hergestellt, also in einfacher Weise und ohne Verwendung eines organischen Lösungsmittels.

Nach der Erfindung ist vorgesehen, daß das adhäsive Mittel auf 100 Teile eines oder mehrerer halogenierter Polyolefine 0,1 bis 80 Teile eines oder mehrerer Polyacrylate, 50 bis 500 Teile eines oder mehrerer Phenolharze und 1 bis 100 Teile eines oder mehrerer Vernetzer enthält. Bei dieser Zusammensetzung wird eine besonders hohe Haftkraft des adhäsiven Mittels erzielt. Dem Mittel können. zusätzlich 30 bis 300 Teile Pigment und/oder Ruß zugesetzt werden. Der Trockensubstanzgehalt der wäßrigen Suspension sollte 17 bis 65 Gew.-% betragen. Der Begriff "Teile" bedeutet im Sinne der Erfindung Gewichtsteile.

In bevorzugter Ausgestaltung der Erfindung ist vorgesehen, daß die Latices 0,1 bis 5 Gew.-% an Comonomeren, bezogen auf das Festpolymer im Latex, enthalten und daß der Latex ein Emulsions-Copolymerisat aus 2-Chlorbutadien und Methacrylsäure ist. Mit diesen Zusammensetzungen werden die besten Ergebnisse für die Haftstärke und die Filmbildung erreicht. Bei diesen Zusammensetzungen beträgt der Chlorgehalt 35 bis 50 Gew.-%.

Eine weitere vorteilhafte. Ausgestaltung der Erfindung betrifft ein adhäsives Mittel, bei dem das Polyacrylat ein Alkali- oder Ammoniumsalz einer Polyacrylsäure und/oder einer substituierten Polyacrylsäure ist. Mit diesen dispersionsstabilisierenden Polymeren werden die besten Ergebnisse bei der Stabilisierung der Phenolharz-Dispersion erreicht. Der Zusatz von weiteren Dispersionshilfsmitteln, wie Emulgatoren, Netzmitteln und/oder Entschäumern sowie von Polyvinylacetat und/oder teilweise verseiftem Polyvinylacetat ist vorteilhaft. Die substituierte Polyacrylsäure ist ein Polymerisat oder ein Folgeprodukt aus Monomeren mit der allgemeinen Formel (I): 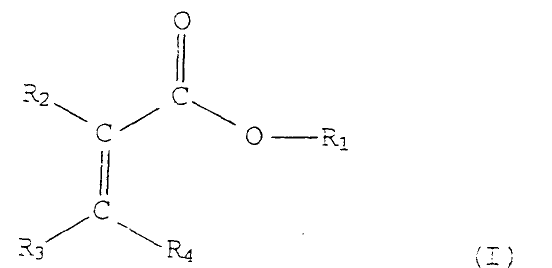 wobei
R₁ = H, CH₃, Alkyl-C₂ bis C₄, Aryl,
R₂ = H, OH, CN, CH₃, Alkyl-C₂ bis C₈, F, Cl, Br,
R₃, R₄ = H, CH₃, Alkyl-C₂ bis C₈, Aryl, O-CH₃, O-Alkyl-C₂ bis C₈, O-Aryl
ist.

Nach der Erfindung hat es sich als vorteilhaft erwiesen, wenn der Vernetzer aus einem oder mehreren Oxiden der mehrwertigen Metalle Mg, Al, Ca, Zn, Zr, Cd und Pb besteht. Mit diesen Metalloxiden werden bezüglich der Haftstärke und der Korrosionsbeständigkeit sehr gute Ergebnisse erzielt.

Erfindungsgemäß ist die Verwendung des adhäsiven Mittels als Haftgrundierung auf einem Substrat vorgesehen. Die Verwendung erfolgt bevorzugt in der Weise, daß das Substrat mit dem adhäsiven Mittel als Primer und danach mit einem Cover-Zement beschichtet und anschließend unter Vulkanisationsbedingungen mit einem Kautschuk verbunden wird.

Die Erfindung wird im folgenden anhand von Beispielen näher erläutert.

### Beispiel 1:

Aus 5 cm²-Flachkopfschrauben bestehende Probekörper wurden mit einem erfindungsgemäßen adhäsiven Mittel Primer (A) gemäß Tabelle 1 und zum Vergleich mit dem lösungsmittelhaltigen Primer (B) Megum 3270^{R} Chemetall GmbH) beschichtet und getrocknet. Die aus Stahl (ST 37) hergestellten Flachkopfschrauben wurden vor dem Test durch Sandstrahlen gereinigt und entfettet. Anschließend wurden beide Probekörper mit Haftmitteln (Cover-Zement) Megum 100^{R} (X) und Megum 14550^{R} (Chemetall GmbH) beschichtet und etwa 1 h bei Raumluft gehalten. Danach wurden die Probekörper mit einem Kautschuk gemäß Tabelle 2 vulkanisiert. Die Haftung wurde nach 24 h geprüft. Tabelle 3 zeigt einen Vergleich der Haftwerte. Tabelle 4 zeigt einen Vergleich im Salzsprühtest. Tabelle 5 zeigt einen Vergleich im Kochend-Wasser-Test.

**Tabelle 1**

| | |
|---|---|
| Zusammensetzung: Primer (A) | |

| Bestandteile | Anteile in Gew.-% |
|---|---|
| Copolymerlatex aus 2-Chlorbutadien und Metacrylsäure ¹⁾ | 16,0 |
| Resol ²⁾ (H₂O < 5 Gew. - %), stabilisiert mit Natriumpolyacrylat | 19,0 |
| ZnO | 1,5 |
| ZrO₂ | 2,2 |
| Netzmittel ³⁾ | 0,35 |
| Ruß ⁴⁾ | 1,2 |
| TiO₂ | 5,8 |
| Kieselsäure ⁵⁾ | 1,6 |
| Wasser ⁶⁾ | 52,35 |

| | |
|---|---|
| 1) nichtionisch | |
| 2) Gelierzeit bei 130°C (DIN ISO 9396) : 12 min Viskosität bei 20°C (DIN ISO 9371) : 4000 mPa · s Gehalt an freiem Phenol : etwa 12 Gew.-% | |
| 3) Fenovon/Anterox (GAF Chemie) | |
| 4) F 101 (Degussa AG) | |
| 5) Aerosil A200 (Degussa AG) | |
| 6) demineralisiert | |

**Tabelle 2**

| | |
|---|---|
| Zusammensetzung: Kautschuk NR Mischung (65 Shore A) | |

| Bestandteile | Anteile in Gewichtsteilen |
|---|---|
| Naturkautschuk ⁷⁾ | 100,0 |
| Stearinsäure | 2,5 |
| ZnO | 5,0 |
| Naftolen P612⁸⁾ | 2,0 |
| Ruß N220 ⁹⁾ | 50,0 |
| Vulkanox PAN ¹⁰⁾ | 1,0 |
| IPPD Vulknox 4010 NA ¹⁰⁾ | 0,4 |
| CBS ¹¹⁾ | 0,5 |
| Schwefel | 2,6 |

| | |
|---|---|
| 7) Kautschukgesellschaft mbH | |
| 8) Weichmacher auf Mineralölbasis der Firma Chemetall GmbH | |
| 9) Degussa AG | |
| 10) Alterungsschutzmittel für Kautschuk der Firma Bayer AG | |
| 11) Cyclohexylbenzothiazylsulfenamid (Bayer AG) | |

**Tabelle 3**

| | | | | |
|---|---|---|---|---|
| Haftprüfung Haftmittelkombination: Primer/Cover Die Vulkanisation erfolgte in 21 min bei 150°C. | | | | |

| Primer/ Cover | Vortemperzeit [min] | Haftwerte [mPa] | Bruchbild [%R] im Gummi | Bruchbild [%M] Abriß vom Metall |
|---|---|---|---|---|
| A/X | 0 | 10.2 | 100 | 0 |
| B/X | 0 | 10.9 | 100 | 0 |
| A/Y | 0 | 10.4 | 100 | 0 |
| B/Y | 0 | 11.2 | 100 | 0 |
| A/X | 5 | 11.2 | 100 | 0 |
| B/X | 5 | 11.0 | 98 | 2 |
| A/Y | 5 | 10.9 | 100 | 0 |
| B/Y | 5 | 10.9 | 100 | 0 |
| A/X | 10 | 12.0 | 100 | 0 |
| B/X | 10 | 11.8 | 98 | 2 |
| A/Y | 10 | 10.1 | 100 | 0 |
| B/Y | 10 | 10.0 | 99 | 1 |

**Tabelle 4**

| | | |
|---|---|---|
| Salzsprühtest 2 kg Zugbelastung im Winkel von 180° (NR 65 Shore A) | | |

| Haftmittelkombination | Zeit [h] | Ablösung [%] |
|---|---|---|
| (A)/(X) | 1.000 | < 5 |
| (B)/(X) | 1.000 | < 5 |

**Tabelle 5**

| | | |
|---|---|---|
| Kochend-Wasser-Test T = 96°C bis 100°C 2 kg Zugbelastung im Winkel von 90° (NR 65 Shore A) | | |

| Haftmittelkombination | Zeit [h] | Ablösung [%] |
|---|---|---|
| (A)/(X) | 24 | 0 |
| (B)/(X) | 24 | 0 |

### Beispiel 2

Das erfindungsgemäße adhäsive Mittel gemäß Tabelle 1 wurde als Primer in Kombination mit einem Cover-Zement auf unterschiedlichen Substraten eingesetzt und nach Vulkanisation mit einer EPDM-Mischung gemäß Tabelle 6 auf die Haftfestigkeit geprüft. Tabelle 7 zeigt die Haftwerte auf den unterschiedlichen Substraten, wobei die zerstörende Prüfung in allen Fällen zu einem massiven Gummibruch führte

**Tabelle 6**

| | |
|---|---|
| Zusammensetzung: EPDM-Mischung (40 Shore A) Die Vulkanisation erfolgte in 26 min bei 160C. | |

| Bestandteile | Anteile in Gewichtsteilen |
|---|---|
| EPDM Keltan® 512 x 50 ¹²⁾ | 150,0 |
| Stearinsäure | 1,0 |
| ZnO | 5,0 |
| Naftolen P613 ⁸⁾ | 7,0 |
| Ruß N990 9) | 100,0 |
| Perkadox® 14-40 ¹³⁾ | 9,0 |
| TAC 70 ¹⁴⁾ | 2,14 |

| | |
|---|---|
| 12) Kautschuk der Firma DSM | |
| 13) Polymerisationskatalysator der Firma Akzo AG | |
| 14) Trialylcyanorat (Degussa AG) | |

**Tabelle 7**

| | | |
|---|---|---|
| Haftwerte für Frimer (A) auf unterschiedlichen Substraten in Kombination mit Megum 14550^{R} als Cover-Zement im Schältest. Die Vulkanisation erfolgte in 26 min bei 160°C. | | |

| Substrat | Haftwerte [N/mm] | Bruchbild in [%R] |
|---|---|---|
| Edelstahl ST 37 | 8,9 | 100 |
| Aluminium | 9,4 | 100 |
| Galvan, Stahl | 9,3 | 100 |

Bei den vorstehend dokumentierten Tests wurden für die erfindungsgemäße Primerzubereitung weder bei der Nullhaftung, noch beim Vortempern der beschichteten Prüfkörper Metallfehler registriert. Die Primerzubereitung hatte sich als vortemperfest erwiesen. Sie haftete sehr gut auf den unterschiedlichsten Metallen als Substrat. Bei der Korrosionsbeständigkeit wurden sehr gute Ergebnisse erzielt. Die Primerzubereitung zeigte in Kombination mit den verschiedensten Standard-Cover-Zementen sehr gute Ergebnisse.

## Patentansprüche

1. Adhäsives Mittel auf wäßriger Basis mit einem Gehalt von weniger als 5 Gew.-% an hydroxylhaltigen organischen Verbindungen, das aus einer mit einem Stabilisator stabilisierten wäßrigen Dispersion eines oder mehrerer Phenolharze, einem oder mehreren Latices und einem oder mehreren, als Vernetzer wirkenden Metalloxiden besteht, **dadurch gekennzeichnet, daß** als Phenolharze Kondensationsprodukte aus Phenolen mit Formaldehyd verwendet werden, daß die wäßrige Dispersion eines oder mehrerer Phenolharze durch ein oder mehrere, als Stabilisator wirkende Polyacrylate stabilisiert ist, daß die Polyacrylate aus Monomeren der allgemeinen Formel 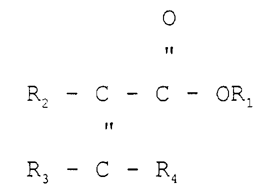 bestehen, in der
R₁ = H, CH₃, Alkyl - C₂ bis - C₄, Aryl
R₂ = H, OH, CN, CH₃, Alkyl - C₂ bis - C₆, F, Cl, Br
R₃, R₄ = H, CH₃, Alkyl - C₂ bis - C₈, Aryl, O-CH₃, O-Alkyl - C₂ bis - C₈, O-Aryl
ist, daß die Latices entweder aus einem oder mehreren halogenierten Polyolefinen oder aus einem Emulsions-Copolymerisat aus 2-Chlorbutadien und 0,1 bis 5 Gew.-% Methacrylsäure, bezogen auf das Festpolymer im Latex, gebildet sind und daß das adhäsive Mittel frei von organischen Lösungsmitteln ist sowie gegebenenfalls Pigmente und/oder Ruß und Dispergierhilfsmittel enthält.

2. Adhäsives Mittel nach Anspruch 1, **dadurch gekennzeichnet, daß** es auf 100 Teile eines oder mehrerer halogenierter Polyolefine 0,1 bis 80 Teile eines oder mehrerer Polyacrylate, 50 bis 500 Teile eines oder mehrerer Phenolharze und 1 bis 100 Teile eines oder mehrerer Vernetzer enthält.

3. Adhäsives Mittel nach den Ansprüchen 1 bis 2, **dadurch gekennzeichnet, daß** das Polyacrylat ein Alkali- oder Ammoniumsalz einer Polyacrylsäure und/oder einer substituierten Polyacrylsäure ist.

4. Adhäsives Mittel nach den Ansprüchen 1 bis 3, **dadurch gekennzeichnet, daß** der Vernetzer aus einem oder mehreren Oxiden der Metalle Mg, Al, Ca, Zn, Zr, Cd und Pb besteht.

5. Adhäsives Mittel nach den Ansprüchen 1 bis 4, **dadurch gekennzeichnet, daß** als Phenolharze ein Resol und/oder ein Novolack-Harz verwendet werden.

6. Verwendung eines adhäsiven Mittels nach den Ansprüchen 1 bis 5 als Haftgrundierung auf einem Substrat.

7. Verwendung nach Anspruch 6, bei der das Substrat mit dem adhäsiven Mittel als Primer und danach mit einem Cover-Zement beschichtet und anschließend unter Vulkanisationsbedingungen mit einem Kautschuk verbunden wird.

## Claims

1. Water-based adhesive agent containing less than 5 wt.% of organic compounds containing hydroxyl groups, which agent consists of a stabiliser-stabilised aqueous dispersion of one or several phenolic resins, one or several latices and one or several metal oxides which act as crosslinking agents, **characterised in that** condensation products of phenols with formaldehyde are used as the phenolic resins, that the aqueous dispersion of one or more phenolic resins is stabilised by one or more polyacrylates which act as stabiliser, that the polyacrylates consist of monomers of the general formula 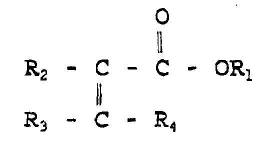 in which
R₁ = H, CH₃, C₂ to C₄ alkyl, aryl
R₂ = H, OH, CN, CH₃, C₂ to C₈ alkyl, F, Cl, Br
R₃, R₄ = H, CH₃, C₂ to C₈ alkyl, aryl, O-CH₃, C₂ to C₈ O-alkyl, O-aryl
that the latices are formed either from one or more halogenated polyolefins or from an emulsion copolymer of 2-chlorobutadiene and 0.1 to 5 wt.% of methacrylic acid, relative to the solid polymer in the latex, and that the adhesive agent contains no organic solvents and optionally contains pigments and/or carbon black and dispersion auxiliaries.

2. Adhesive agent according to claim 1, **characterised in that**, per 100 parts of one or several halogenated polyolefins, it contains 0.1 to 80 parts of one or several polyacrylates, 50 to 500 parts of one or several phenolic resins and 1 to 100 parts of one or several crosslinking agents.

3. Adhesive agent according to claims 1 to 2, **characterised in that** the polyacrylate is an alkali metal salt or ammonium salt of a polyacrylic acid and/or a substituted polyacrylic acid.

4. Adhesive agent according to claims 1 to 3, **characterised in that** the crosslinking agent consists of one or several oxides of the metals Mg, Al, Ca, Zn, Zr, Cd and Pb.

5. Adhesive agent according to claims 1 to 4, **characterised in that** a resol and/or a novolak resin are/is used as the phenolic resins.

6. Use of an adhesive agent according to claims 1 to 5 as a keying primer on a substrate.

7. Use according to claim 6, in which the substrate is coated with the adhesive agent as primer and then with a cover cement and is then bonded with a rubber under vulcanisation conditions.

## Revendications

1. Composition adhésive à base d'eau contenant moins de 5 % en poids de composés organiques hydroxylés, constituée d'une dispersion aqueuse, stabilisée par un agent stabilisant, d'une ou de plusieurs résines phénoliques, d'un ou de plusieurs latex et d'un ou de plusieurs oxydes métalliques jouant le rôle d'agent réticulant, **caractérisée par** le fait que l'on utilise, comme résines phénoliques, des produits résultant de la condensation de phénols et de formaldéhyde, que la dispersion aqueuse d'un ou de plusieurs résines phénoliques est stabilisée par des polyacrylates jouant le rôle d'agent stabilisant, que les polyacrylates sont constitués de monomères de formule générale 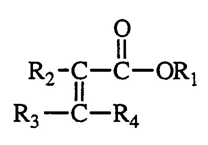 dans laquelle
R₁ représente un atome d'hydrogène, un groupe CH₃, alkyle en C₂₋₄, aryle,
R₂ représente un atome d'hydrogène, un groupe OH, CN, CH₃, alkyle en C₂₋₈, un atome de fluor, de chlore ou de brome,
R₃ et R₄ représentent un atome d'hydrogène, un groupe CH₃, alkyle en C₂₋₈, aryle, -OCH₃, -O-alkyle en C₂₋₈, -O-aryle,
que les latex sont constitués d'un ou de plusieurs oléfines halogénées ou d'un copolymère obtenu par polymérisation en émulsion de 2-chlorobutadiène et de 0,1 à 5 % en poids d'acide méthacrylique, rapporté au polymère solide dans le latex, et que la composition adhésive est exempte de solvants organiques et contient éventuellement des pigments et/ou de la suie et des adjuvants de dispersion.

2. Composition adhésive selon la revendication 1, **caractérisée par** le fait qu'elle contient, pour 100 parties d'une ou de plusieurs polyoléfines halogénées, de 0,1 à 80 parties d'un ou de plusieurs polyacrylates, de 50,0 à 500 parties d'une ou de plusieurs résines phénoliques, et de 1,0 à 100 parties d'un ou de plusieurs agents réticulants.

3. Composition selon l'une des revendications 1 et 2, **caractérisée par** le fait que le polyacrylate est un polyacrylate d'un métal alcalin ou d'ammonium et/ou un polyacrylate substitué d'un métal alcalin ou d'ammonium.

4. Composition adhésive selon l'une quelconque des revendications 1 à 3, **caractérisée par** le fait que l'agent réticulant est constitué d'un ou de plusieurs oxydes des métaux Mg, Al, Ca, Zn, Zr, Cd et Pd.

5. Composition adhésive selon l'une quelconque des revendications 1 à 4, **caractérisée par** le fait que la résine phénolique est une résine résol et/ou une résine novolaque.

6. Utilisation d'une composition adhésive selon les revendications 1 à 5 en tant que couche de base adhésive sur un substrat.

7. Utilisation selon la revendication 6, dans laquelle le substrat est revêtu d'abord avec la composition adhésive en tant que couche de base, puis avec un ciment couvrant et est ensuite lié à un caoutchouc dans des conditions de vulcanisation.
